# EUROPÄISCHE PATENTANMELDUNG

(11) **EP 3 944 762 A1**
(43) Veröffentlichungstag der Anmeldung: **02.02.2022**
(21) Anmeldenummer: 20188011.9
(22) Anmeldetag: 27.07.2020
(51) Int. Cl.: A01N 25/10, A01N 31/16, A01N 59/00, A01N 59/16, C09D 5/14, A01N 25/34

(54) **BIOZID MIT LEITENDEN EIGENSCHAFTEN UND DESSEN VERWENDUNG**

(71) Anmelder: JFL-Materials GmbH, 64625 Bensheim (DE)
(72) Erfinder: LEIDEL, Matthias, 64625 Bensheim (DE)
(74) Vertreter: Simandi, Claus

(57) **Zusammenfassung**

Die Erfindung betrifft eine biozide Zusammensetzung, die eine Kombination aus bioziden Komponenten enthält, insbesondere in einem Trägermaterial und deren Verwendung.

## Beschreibung

Die Erfindung betrifft eine biozide Zusammensetzung, die eine Kombination aus bioziden Komponenten enthält, insbesondere in einem Trägermaterial und deren Verwendung.

Biozide Mittel werden in vielen Bereichen der Technik eingesetzt, beispielsweise zur Bekämpfung von schädlichen Bakterien, Pilzen, Algen oder Viren. Unter einem Biozid wird jeglicher Stoff oder jegliches Gemisch verstanden, und zwar in der Form, in der er/es zum Verwender gelangt, und der/das aus einem oder mehreren Wirkstoffen besteht, diese enthält oder erzeugt, der/das dazu bestimmt ist, auf andere Art als durch bloße physikalische oder mechanische Einwirkung Schadorganismen zu zerstören, abzuschrecken, unschädlich zu machen, ihre Wirkung zu verhindern oder sie in anderer Weise zu bekämpfen (siehe z.B. Definition gemäß Verordnung (EU) Nr. 528/2012 (Biozid-Verordnung)).

Metallitanate sind die Salze oder Ester der Titansäuren vom Typ (HₓTi_{y}O_{z}), also MeₓTi_{y}O_{z} (Me=Metall), insbesondere solche Metallsalze der Orthotitansäure (H₄TiO₄), wobei neben diesen Orthotitanaten auch die entsprechenden Meta- und Peroxotitansäuren bzw. -titanate bekannt sind.

Tannine oder Tanninsäuren sind Gerbstoffe oder Gerbsäuren auf der Basis von Polyhydroxyphenolen.

Die vorgenannten Stoffklassen sind z.B. als antibakterielle Mittel beschrieben.

Siliziumnitrid (Si₃N₄) auch in Form eines Salzes bzw. dotierter Mischkristall wie Metallkation-Si₃N₄-Nichtmetallanion, solche wie Z_{3-α}R_{3-β}Si₃N_{4-y}X_{y} sind ebenfalls als antibakterielle Mittel beschrieben.

WO 2020/051004 A1 beschreibt die Eignung von Siliziumnitrid in Pulverform zum Bekämpfen von Viren, Bakterien und Pilzen. Das Siliziumnitrid kann in einer Beschichtung eingebracht sein.

Der vorliegenden Erfindung liegt die Aufgabe zugrunde, eine neue biozide Zusammensetzung enthaltend biozide Komponenten bereitzustellen, die sich dadurch auszeichnet, dass sich ihre Komponenten vorteilhaft, insbesondere überadditiv zusammenwirken, wobei eine besonders vorteilhafte Leitfähigkeit erreicht werden kann, sei es auf der Basis durch Licht, UV-Licht, LED-Licht oder durch Anlegung einer Spannung, insbesondere an einem Trägermaterial.

Überraschenderweise weist eine solch erreichte Leitfähigkeit eine hohe förderliche biozide Wirkung auf.

Eine weitere Aufgabe liegt darin, die erfindungsgemäßen bioziden Komponenten für ein Trägermaterial zu verwenden, solche wie flüssige oder feste Träger, insbesondere Beschichtungen (wie z.B. Lacke oder Farben), Folien oder Oberflächen. Folien sind erfindungsgemäß bevorzugt.

Schließlich liegt eine weitere Aufgabe darin, Produkte herzustellen, die biozid ausgerüstet sind, insbesondere sind die Produkte Beschichtungen, vorzugsweise Folien, und ein Vlies davon.

Die Aufgabe wird erfindungsgemäß durch mindestens einen Patentanspruch gelöst.

Daher betrifft die Erfindung eine biozide Zusammensetzung enthaltend mindestens ein Metalltitanat, ein Tannin und ein Siliziumnitrid oder ein dotierter Mischkristall davon (nachstehend erfindungsgemäße biozide Zusammensetzung).

In einer bevorzugten Ausführungsform ist das Metalltitanat vom Typ MeₓTi_{2-x-y}O_{4-z}X_{z} mit Titan in der Oxidationsstufe 3 oder 4, wobei das Metall ausgewählt ist, aus der 1. oder 2. Hauptgruppe, ein Edelmetall oder aus einer Nebengruppe, oder Lanthanoide, bevorzugt sind K, Ca, Sr, Ba, Fe, La, Mg, Sn, Ce, Mo, W, V, Cu, Au, Pt, Ag. Die Anionen X sind ausgewählt aus Halogenid, Carbonat, Hydrogencarbonat, Nitrat, Nitrit, Nitrid, Sulfat, Sulfit oder Sulfid, oder X entfällt.

In einer bevorzugten Ausführungsform ist das Tannin von beliebiger Herkunft, synthetischer oder natürlicher Natur.

In einer bevorzugten Ausführungsform ist Siliziumnitrid (Si₃N₄) als synthetischer Reinstoff zu verwenden. In einer weiteren bevorzugten Form ist ein "formales" Salz bzw. dotierter Mischkristall eines Siliziumnitrids zu verwenden, und zwar der allgemeinen Formel "Metallkation-Si₃N₄-Nichtmetallanion", vorzugsweise der allgemeinen Formel Z_{3-α}R_{3-β}Si₃N_{4-y}X_{y}, mit:
Z = Nebengruppenelement als Kation einschließlich der Lanthanide und der Actiniden, insbesondere Zr, Ce, Mo, Wo;
R = Hauptgruppenelement als Kation, insbesondere Ca, Mg, Ba, Sr, Al, B oder beliebiges Gemisch derselben mit den molaren Verhältnissen von α+β < 0,9;
X=Anion wie N, O, S, Halogenide mit y = 0, 1;

In einer weiteren bevorzugten Ausführungsform weist das eingesetzte Siliziumnitrid eine Wasserlöslichkeit von höchstens 2 g/l (bei 20°C) auf.

Die erfindungsgemäße biozide Zusammensetzung zeigt sowohl eine hervorragende elektrische als auch photo-elektrische Leitfähigkeit auf, sodass eine hohe biozide Wirkung erreicht werden kann. Im Sinne dieser Erfindung bedeutet biozide Wirkung, insbesondere eine antivirale, antibakterielle und antifungale Wirkung, wobei die antivirale Wirkung bevorzugt ist.

Weiterhin bevorzugt ist für Siliziumnitrid eine Korngröße d90, vorzugsweise bestimmt gemäß ISO 20998-1:2006, von weniger als 1500 nm, vorzugsweise weniger als 1000 nm, besonders bevorzugt weniger als 500 nm.

Die erfindungsgemäße Biozid-Zusammensetzung kann in verschiedenen Zubereitungen vorliegen und zum Einsatz gelangen, wie z. B. in fester Form als Mischung der in ihr enthaltenen Komponenten. Besonders bevorzugt liegt die biozide Zusammensetzung in Form eines Pulvers vor, insbesondere mit einer Korngröße von weniger als 1500 nm, vorzugsweise weniger als 1000 nm, besonders bevorzugt weniger als 500 nm.

In einer vorteilhaften Ausführungsform liegt die erfindungsgemäße biozide Zusammensetzung in Form einer flüssigen Zubereitung vor, beispielsweise als Lösung, Suspension oder Dispersion in einem flüssigen Medium. Selbstverständlich kann die erfindungsgemäße biozide Zusammensetzung ebenfalls direkt in dem zu konservierenden Produkt gemischt werden.

Es ist vorteilhaft, wenn in der erfindungsgemäßen Biozid-Zusammensetzung die Komponenten Metalltitanat : Tannin : Siliziumnitrid im Gewichtsverhältnis von 1: 0,01-2 :0,01-1, vorzugsweise 1: 0,5-2 : 0,01-0,8, insbesondere von 1: 0,8-1,2 : 0,1-0,5.

Die erfindungsgemäße Biozid-Zusammensetzung kann daneben noch andere übliche Bestandteile enthalten, die dem Fachmann auf dem Gebiet der Biozide als Zusatzstoffe bekannt sind. Es sind dies z.B. Verdickungsmittel, Entschäumer, Stoffe zur Einstellung des pH-Werts, Duftstoffe, Dispergierhilfsmittel und färbende oder Verfärbungs-vermeidende Stoffe, Komplexierungsagenzien und Stabilisatoren.

Die erfindungsgemäß eingesetzten Komponenten sind bekannte Stoffe und sind als solche im Handel erhältlich oder nach bekannten Methoden herzustellen.

Die erfindungsgemäße Biozid-Zusammensetzung kann zur Konservierung auf unterschiedlichen Gebieten eingesetzt werden. Sie eignet sich beispielsweise für den Einsatz und Verwendung in Folien, Oberflächen und Beschichtungen, einschließlich Farben, Lacke, Lasuren und Putzen, Emulsionen, Latices, Polymerdispersionen, Kreideaufschlämmungen, mineralischen Slurries, keramischen Massen, Klebstoffen, Dichtstoffen, Bitumenemulsionen, Pigmentpasten und Pigmentdispersionen, Verdickern, Flüssigkeiten bei der Lederherstellung, Flüssigkeiten bei der Textilherstellung, Bohr- und Schneidölen, hydraulischen Flüssigkeiten, Kühlschmierstoffen und Kraftstoffen.

Beispielsweise kann eine Oberfläche einen Anstrich mit einer bioziden Zusammensetzung erhalten, wobei die biozide Zusammensetzung in einem geeigneten Mittel, wie eine flüssige Zubereitung o.a. enthalten ist. Die biozide Zusammensetzung kann z.B. in eine Folie mittels Extrusion eingebracht werden.

In einer weiteren bevorzugten Ausführungsform betrifft die erfindungsgemäße biozide Zusammensetzung daher ein Trägermaterial, wobei die biozide Zusammensetzung in das Trägermaterial eingebracht wird. Das Trägermaterial kann beliebiger Natur sein, insbesondere flüssige oder feste Träger, vorzugsweise jedoch Beschichtungen (wie z.B. Lacke oder Farben), Folien oder Oberflächen.

Das Trägermaterial kann vorzugsweise zur bioziden Ausrüstung eines beliebigen Gegenstandes verwendet werden, insbesondere zu deren Schutz. Solche Gegenstände können nicht abschließend Maschinen, Apparate, Anlagen, Geräte, Fahrzeuge aller Art, Behälter sein.

Im Fall von Folien oder Oberflächen sind Thermoplasten besonders bevorzugt, insbesondere solche wie Acrylnitril-Butadien-Styrol (ABS), Polyamid (PA), Polylactat (PLA), Polymethylmethacrylat (PMMA), Polycarbonat (PC), Polyethylenterephthalat (PET), Polyethylen (PE), Polypropylen (PP), Polystyrol (PS), Polyetheretherketon (PEEK) und Polyvinylchlorid (PVC) oder Mischungen und Verbundstoffe. Solche Folien und Oberflächen können ebenfalls als Beschichtung eingesetzt werden. Daher betrifft die Erfindung ein Trägermaterial enthaltend eine erfindungsgemäße biozide Zusammensetzung und dessen Verwendung. Beispielsweise kann das Trägermaterial eine Folie sein oder ein Vlies davon, welches zum Beispiel als Filter eingesetzt wird. Der Einsatz und die Verwendung solcher Filter kann beispielsweise für Gase, inklusive Luft oder Flüssigkeiten erfolgen, z.B. in einer Klimaanlage, in einer Schutzmaske, für die Luftaufbereitung oder für die Wasseraufbereitung, insbesondere zur Desinfektion, erfolgen.

Weiterhin kann ein Trägermaterial enthaltend eine erfindungsgemäße biozide Zusammensetzung zum Schutz von Mensch und Tier verwendet werden, und z.B. aus einer Folie für eine Schutzbekleidung, insbesondere Schutzanzug, Schutzmaske, Schutzhandschuhe oder Überzug erhalten werden.

Sofern das Trägermaterial fixiert sein soll, ist weiterhin bevorzugt, dass an dem Trägermaterial eine elektrische Spannung als Gleich- oder Wechselspannung angelegt ist. Sofern das Trägermaterial mobil sein soll, ist bevorzugt, dass das Trägermaterial einer Lichtquelle ausgesetzt ist, insbesondere UV-Licht, monochromatisches oder polychromatisches LED-Licht, Laserstrahlung oder Sonnenlicht.

Daher betrifft die Erfindung ein Trägermaterial enthaltend eine biozide Zusammensetzung, an welche eine elektrische Spannung zur Elektroneneinspeisung angelegt ist, und / oder ein Trägermaterial enthaltend eine biozide Zusammensetzung, welches einer Lichtquelle zur Photoneneinspeisung mittels Bestrahlung ausgesetzt ist.

Sofern das Trägermaterial eine Folie ist, kann ebenfalls eine Multilayerfolie verwendet werden, wobei neben der erfindungsgemäßen Folie ebenfalls solche Folien im Verbund verwendet werden, welche eine elektrische, thermoelektrische, photoelektrische oder piezoelektrische Leitfähigkeit aufweisen.

Die erfindungsgemäße biozide Zusammensetzung kann für den Fachmann in bekannter Weise in ein Trägermaterial eingebracht werden, vorzugsweise wird die erfindungsgemäße biozide Zusammensetzung in Pulverform eingebracht.

In einer weiteren bevorzugten Ausführungsform sind 0,01 g bis 10 g, insbesondere 0,1 g bis 10 g erfindungsgemäße Biozid-Zusammensetzung in 100 g (bzw. 0,01 - 10 Gew %) Trägermaterial enthalten.

In einer weiteren Ausführungsform der Erfindung kann für die biozide Zusammensetzung, die Siliziumnitrid-Komponente (supra) entfallen, da bereits Metalltitanat und Tannin eine überadditive biozide Wirkung in einem Trägermaterial zeigen, vorzugsweise in einer Folie.

Daher betrifft die Erfindung ebenfalls ein Trägermaterial ausgewählt aus einer Folie enthaltend eine biozide Zusammensetzung, welche Metalltitanat und Tannin, insbesondere im Gewichtsverhältnis 1 : 0,5 - 2 aufweist.

Nachfolgende Beispiele dienen zur näheren Erläuterung der Erfindung, ohne die Erfindung einzuschränken.

### Beispiel 1:

Ag_{0,2}Ti_{1,8}O₄: wird mit einer Planetenkugelmühle auf ca. 500 nm vermahlen und mittels Doppelschneckenextruder in eine HD/LD-PE Matrix eingearbeitet. Die Konzentration des Titanats beträgt 2 Gew. %. Das Material wird zu einer Folie mit einer Stärke von ca. 0,04 mm extrudiert. Anschließend wird die biozide Wirkung auf die beiden Modellkeime Staphylococcus Aureus und SARS-CoV-2 nach ISO 21702 geprüft.

### Beispiel 2:

Alkohollösliches natürliches grob gefälltes Tannin wird zu 40% in 96%-igem Ethanol gelöst und bei 120°C langsam getrocknet, so dass ein sehr fein kristallisiertes Pulver entsteht. 3 Teile dieses Pulvers werden mit 2 Teilen eines wie in Beispiel 1 hergestellten Titanats und mit 95 Teile einer HD/LD-PE Matrix gemischt und mit einem Doppelschneckenextruder sehr fein homogenisiert. Das Material wird zu einer Folie mit ca. 0,04 mm extrudiert. Anschließend wird die biozide Wirkung auf die beiden Modellkeime Staphylococcus Aureus und SARS-CoV-2 nach ISO 21702 geprüft.

### Beispiel 3:

Handelsübliches Siliziumnitrid mit einer durchschnittlichen Korngröße von 12µ wurde mit weiteren Additiven Ethanol und Tannin gemäß Tabelle 1 in einem Topfroller gemahlen. Anschließend erfolgte eine langsame Trocknung bei ca. 120 °C. Es wurde ein "Siliziumnitridkomplex" als feines gelblich braunes Pulver erhalten. Die Partikelgröße beträgt etwa 1.000 - 2.000 nm.

Es wurden 0,5 Teile dieses Pulvers, 2 Teile Tanninpulver aus Beispiel 2 und 2 Teile Titanat aus Beispiel 1 mit 95,5 Teilen einer HD/LD-PE Matrix gemischt und mit einem Doppelschneckenextruder sehr fein homogenisiert. Das Material wird zu einer Folie mit ca. 0,04 mm extrudiert. Anschließend wird die biozide Wirkung auf die beiden Modellkeime Staphylococcus Aureus und SARS-CoV-2 gemäß ISO 21702 geprüft. Tabelle 1 :

| **Komponenten** | **Gewichtsanteile in %** |
|---|---|
| Si3N4 | 25 |
| Ethanol | 50 |
| Peptapon 52 | 0,25 |
| Strodex PK 90 | 2,75 |
| Tego Dispers 752 | 8 |
| Tannin | 13,25 |
| Tividia 2500 | 0,2 |
| Texanol | 0,35 |
| Tego Airex 825 | 0,2 |

Bei allen drei Beispielen wurde der Wirkstoff in einem Zwischenschritt zunächst in höherer Konzentration von 30% in eine PE-Vormischung (Masterbatch) eingebracht. Durch eine weiteren Verdünnungsschritt bei der Extrusion wurden die in den Beispielen genannten Konzentrationen erhalten.

### Untersuchung der Wirksamkeit:

Die Abnahme der Keimzahl wurde nach 10 Minuten und nach 24h bestimmt.
Dabei wurden folgende Ergebnisse erhalten:

### Für den Keim Staphylococcus Aureus:

**Aus Beispiel 1 (2% Metalltitanat)**

| | Keimzahl Start | Keimzahl Ende | mittlere Reduktion % |
|---|---|---|---|
| Einwirkzeitzeit | | | |
| 10 min | 8,01 E+05 | 8,90E+04 | 88,889 |
| 24 h | 2,71 E+05 | 2,05E+01 | 99,99 |

**Aus Beispiel 2 (2% Metalltitanat + 3% Tannin)**

| | Keimzahl Start | Keimzahl Ende | mittlere Reduktion % |
|---|---|---|---|
| Einwirkzeit | | | |
| 10 min | 1,01 E+05 | 6,60E+03 | 93,465 |
| 24 h | 2,71 E+05 | 9,90E+00 | 99,996 |

**Aus Beispiel 3 (2% Metalltitanat 2% Tannin 0,5% Siliziumnitrid-komplex)**

| | Keimzahl Start | Keimzahl Ende | mittlere Reduktion % |
|---|---|---|---|
| Einwirkzeit | | | |
| 10 min | 2,13E+05 | 2,00E+03 | 99,061 |
| 24 h | 3,01 E+05 | 1,05E+01 | 99,997 |

### Für den Keim SARS-CoV-2:

**Aus Beispiel 1: (2% Metalltitanat):**

| | Keimzahl Start | Keimzahl Ende | mittlere Reduktion % |
|---|---|---|---|
| Einwirkzeit | | | |
| 10 min | 2,03E+05 | 5,11E+04 | 74,828 |
| 24 h | 6,13E+05 | 7,80E+03 | 98,728 |

**Aus Beispiel 2 (2% Metalltitanat + 3% Tannin)**

| | Keimzahl Start | Keimzahl Ende | mittlere Reduktion % |
|---|---|---|---|
| Einwirkzeit | | | |
| 10 min | 2,81 E+05 | 2,46E+04 | 91,246 |
| 24 h | 2,71 E+05 | 9,90E+00 | 99,996 |

**Aus Beispiel 3 (2% Metalltitanat 2% Tannin 0,5% Siliziumnitrid-komplex)**

| | Keimzahl Start | Keimzahl Ende | mittlere Reduktion % |
|---|---|---|---|
| Einwirkzeit | | | |
| 10 min | 1,17E+05 | 8,10E+03 | 93,077 |
| 24 h | 3,13E+05 | 1,00E+01 | 99,997 |

### Diskussion:

Die Verwendung des Titanates gemäß Beispiel 1 führt zu einer beachtlichen Reduktion der Keimzahlen, wobei sich der SARS-CoV-2 Virus als deutlich widerstandsfähiger als der multiresistente Krankenhauskeim S. Aureus erweist. In der bevorzugten Anwendung einer PE-Folie ist es essentiell, dass diese, wenn man diese als Schutzfolie gegen gefährliche Krankheitserreger verwenden will, bereits nach einer kurzen Zeit - im Beispiel 10 Minuten - eine sehr hoher Wirksamkeit haben soll. Im Beispiel 1 wird diese als noch nicht ausreichend beurteilt, um Schmierinfektionen zu verhindern. Die Wirksamkeit des Titanates wird bei dieser Prüfung, die im Dunkeln stattfindet, durch das Bereitstellen von Silberionen determiniert. Das silberhaltige Titanat in der Folie liegt abhängig von der Konzentration in der Folie ebenfalls in zugänglichen Bereichen der Folienoberfläche vor. Bis zu einem bestimmten Grad führt die Konzentrationserhöhung des Titanates zu einer verbesserten Wirksamkeit. Da sich Silberionen in neutralem Wasser nur schlecht lösen, läuft die Wirksamkeit bei einer Erhöhung der Zugabemenge in die PE-Matrix einem Grenzwert entgegen, der nicht überschritten werden kann.

Durch die Zugabe des Tannins gemäß Beispiel 2 kann die gewünschte schnelle Wirksamkeit deutlich gesteigert werden. Hier liegt offensichtlich ein synergistischer Effekt vor, da das Tannin allein gegen die geprüften Modellkeime keinen Effekt zeigt. Die in dem Polymer dispergierte Wirkstoffkombination wirkt wahrscheinlich deswegen besser, weil die Hydroxybenzoesäuren des Tannins zur Komplexbildung der Silberionen beitragen und deren Verfügbarkeit in der wässrigen Lösung erhöhen. Auch hier nähert man sich einem Grenzwert an, was die Wirksamkeit beziehungsweise die Verarbeitbarkeit der Mischung betrifft. Höhere Konzentrationen als 3% führen zunehmend zu Problemen durch Ablagerungen an Extrudern und Mischaggregaten.

Durch die Verwendung von komplexiertem, fein gemahlenem Siliziumnitrid (Beispiel 3) lässt sich die Wirksamkeit der Mischung überraschender Weise sehr deutlich steigern. Obwohl die Tanninmenge von 3% auf 2% reduziert wurde, nimmt im Falle des S. Aureus die mittlere Reduktion von 93 auf 99% zu. Auch im Falle des schwierigeren SARS-CoV-2 nahm die Reduktion von 91 auf 93% zu. Dies dürfte mit den halbleitenden Eigenschaften des Materials zusammenhängen. Mit dem Metalltitanat, das ebenfalls halbleitende Eigenschaften hat, ergibt sich an der Oberfläche der Polymermatrix ein überproportional positives Zusammenwirken, welches sich sicher auf die photooxidativen Eigenschaften auswirkt. In diesem Fall sind es vermutlich verbesserte thermoelektrische Effekte, die die bekanntermaßen bioziden Eigenschaften von Halbleitermaterialien auf die geprüften Keime bewirken.

## Patentansprüche

1. Biozide Zusammensetzung enthaltend mindestens ein Metalltitanat, ein Tannin und ein Siliziumnitrid oder ein dotierter Mischkristall davon.

2. Biozide Zusammensetzung nach Anspruch 1, **dadurch gekennzeichnet, dass** das Metalltitanat vom Typ MeₓTi_{2-x-y}O_{4-z}X_{z} ist, wobei das Metall (Me) ausgewählt ist aus der 1. oder 2. Hauptgruppe, ein Edelmetall oder aus einer Nebengruppe, oder Lanthanoide, insbesondere K, Ca, Sr, Ba, Fe, La, Mg, Sn, Ce, Mo, W, V, Cu, Au, Pt, Ag und
X entfällt oder ausgewählt ist aus Halogenid, Carbonat, Hydrogencarbonat, Nitrat, Nitrit, Nitrid, Sulfat, Sulfit oder Sulfid,
oder das MetalltitanatAg_{0,2}Ti_{1,8}O₄ ist.

3. Biozide Zusammensetzung nach Anspruch 1, **dadurch gekennzeichnet, dass** das dotierte Mischkristall ein Z_{3-α}R_{3-β}Si₃N_{4-y}X_{y} ist, mit:
Z = Nebengruppenelement als Kation einschließlich der Lanthanide und der Actiniden, insbesondere Zr, Ce, Mo, Wo;
R = Hauptgruppenelement als Kation, insbesondere Ca, Mg, Ba, Sr, Al, B oder beliebiges Gemisch derselben mit den molaren Verhältnissen von α+β < 0,9;
X=N, O, S, Halogenide mit y = 0, 1.

4. Biozide Zusammensetzung nach einem der Ansprüche 1 bis 3, **dadurch gekennzeichnet, dass** die biozide Zusammensetzung in Form eines Pulvers vorliegt, insbesondere mit einer Korngröße von weniger als 1500 nm, vorzugsweise weniger als 1000 nm, besonders bevorzugt weniger als 500 nm.

5. Biozide Zusammensetzung nach einem der Ansprüche 1 bis 4, wobei die Komponenten Metalltitanat : Tannin : Siliziumnitrid oder ein dotierter Mischkristall davon im Gewichtsverhältnis 1: 0,01-2 :0,01-1, insbesondere 1: 0,5-2 : 0,01-0,8, insbesondere von 1: 0,8-1,2 : 0,1-0,5 vorliegen.

6. Biozide Zusammensetzung nach einem der Ansprüche 1 bis 5 zur Verwendung in Folien, Oberflächen und Beschichtungen, einschließlich Farben, Lacke, Lasuren und Putzen, Emulsionen, Latices, Polymerdispersionen, Kreideaufschlämmungen, mineralischen Slurries, keramischen Massen, Klebstoffen, Dichtstoffen, Bitumenemulsionen, Pigmentpasten und Pigmentdispersionen, Verdickern, Flüssigkeiten bei der Lederherstellung, Flüssigkeiten bei der Textilherstellung, Bohr- und Schneidölen, hydraulischen Flüssigkeiten, Kühlschmierstoffen und Kraftstoffen.

7. Trägermaterial enthaltend eine biozide Zusammensetzung nach einem der Ansprüche 1 bis 6.

8. Trägermaterial enthaltend eine biozide Zusammensetzung, welche Metalltitanat und Tannin aufweist, insbesondere im Gewichtsverhältnis 1 : 0,5-2.

9. Trägermaterial nach einem der Ansprüche 7 oder 8, wobei das Trägermaterial eine Folie, Multilayerfolie oder ein Vlies ist.

10. Trägermaterial nach einem der Ansprüche 7-9, wobei die Folie oder Oberfläche ein Thermoplast ist, insbesondere Acrylnitril-Butadien-Styrol (ABS), Polyamid (PA), Polylactat (PLA), Polymethylmethacrylat (PMMA), Polycarbonat (PC), Polyethylenterephthalat (PET), Polyethylen (PE), Polypropylen (PP), Polystyrol (PS), Polyetheretherketon (PEEK) und Polyvinylchlorid (PVC) oder Mischungen und Verbundstoffe.

11. Trägermaterial nach einem der Ansprüche 7-10 zur Verwendung in der bioziden Ausrüstung eines Gegenstandes, insbesondere Maschinen, Apparate, Anlagen, Geräte, Fahrzeuge aller Art, Behälter.

12. Trägermaterial nach einem der Ansprüche 7-10 zur Verwendung in der bioziden Ausrüstung eines Filters, insbesondere zur Desinfektion von Gasen, insbesondere Luft und/oder Flüssigkeiten, insbesondere Wasser.

13. Trägermaterial nach einem der Ansprüche 7-10 zur Verwendung in der bioziden Ausrüstung zum Schutz von Mensch und Tier in Form einer Schutzbekleidung, insbesondere Schutzanzug, Schutzmaske, Schutzhandschuhe oder Überzug.

14. Trägermaterial nach einem der Ansprüche 7-10, an welche eine elektrische Spannung angelegt ist, und / oder einer Lichtquelle mittels Bestrahlung ausgesetzt ist.

15. Trägermaterial nach einem der Ansprüche 7-10, aufweisend 0,01 - 10 Gew % der bioziden Zusammensetzung.
